Europäisches Patentamt

European Patent Office

Office européen des brevets

(11) Publication number: 0 272 060
A2

# (12) EUROPEAN PATENT APPLICATION

(21) Application number: 87310905.2

(22) Date of filing: 11.12.87

(51) Int. Cl.⁴: C22B 3/00 , C22B 19/22

(30) Priority: 18.12.86 AU 9568/86

(43) Date of publication of application:
22.06.88 Bulletin 88/25

(84) Designated Contracting States:
BE DE FR IT NL

(71) Applicant: ELECTROLYTIC ZINC COMPANY OF
AUSTRALASIA LIMITED
390 Lonsdale Street
Melbourne Victoria(AU)

(72) Inventor: Matthew, Ian George
Proctors Road
Dynnyrne Hobart 7005(AU)
Inventor: Adams, Robert William
194 Mary's Hope Road
Rosetta Hobart 7010(AU)
Inventor: Mangano, Peter
29 Waverley Street
Bellerive Hobart 7018(AU)

(74) Representative: Spencer, Graham Easdale et
al
A.A. Thornton & CO Northumberland House
303-306, High Holborn
London WC1V 7LE(GB)

(54) Hydrometallurgical recovery of metals and elemental sulphur from metallic sulphides.

(57) Oxidative leaching of metal sulphides, for example zinc sulphide concentrate, is carried out in sulphuric acid solution in the presence of an oxidizing agent comprising oxides of nitrogen. Subsequent treatment enables separation of elemental sulphur and valuable metals such as lead, silver, and gold, and reduction of the remaining solution with a metallic reductant in the presence of added acid produces a substantially nitrate-free solution from which metal values such as zinc may be recovered by electrolytic means.

EP 0 272 060 A2

# HYDROMETALLURGICAL RECOVERY OF METALS AND ELEMENTAL SULPHUR FROM METALLIC SULPHIDES

This invention relates to the oxidative leaching of metal sulphides, for example zinc sulphide concentrate, in sulphuric acid solution in the presence of an oxidizing agent comprising oxides of nitrogen. In one aspect the invention employs nitric/sulphuric acid mixtures.

In a preferred aspect this invention relates to the recovery of the oxidant, $NO/NO_2$, and substantially complete removal of residual oxides of nitrogen (principally nitrate) from solution. There is also provided within the scope of this invention the capacity to achieve sufficiently low nitrate levels to allow the solution to be treated for metal recovery by electrowinning.

In a further preferred aspect it is an object of the present invention to treat zinc sulphide containing ores or concentrates in a manner that will render the zinc soluble; to convert a major portion of the sulphide sulphur to elemental sulphur, and to recover this as a relatively pure product; to recover any lead and silver present as a marketable lead/silver residue and to reduce the residual nitrate level in the solution to a sufficiently low value to avoid problems in the electrolytic recovery of the dissolved zinc.

## Background of the Invention

The conventional route for processing metal sulphides containing ores or concentrates of zinc and other valuable metals involves roasting, leaching, solution purification and electrowinning.

During the roasting operation the sulphur present as sulphide in the ore or concentrate is converted to sulphur dioxide and for both economic and environmental reasons this is normally converted into sulphuric acid. The solid product from the roasting operation, termed calcine, is then leached in a dilute sulphuric acid solution, termed spent electrolyte, which is recycled from the electrowinning step.

After further processing steps to remove impurities the solution passes to electrolytic cells where zinc metal is electrowon and sulphuric acid is regenerated as spent electrolyte which is recycled back to react with further calcine.

The principal limitation to convertional processing is that zinc metal production is directly linked to that of sulphuric acid. As the stockpiling of large quantities of sulphuric acid is quite unacceptable, where difficulties are experienced in disposing of all of the generated acid, for example for use in fertilizer manufacture, the only recourse is to limit metal production in proportion to acid sales. Clearly there is a major incentive to break this nexus, for example by developing a process route whereby the sulphide content of ores or concentrates is converted into elemental sulphur. This product can be readily and safely stockpiled, or converted as required, into sulphuric acid.

A further disadvantage to conventional processing is that the roasting operation, particularly in fluid bed roasters, is dependent on a supply of reasonably high grade ores or concentrates. Such materials are becoming increasingly less plentiful and this trend is expected to continue as higher grade ore deposits become worked out. As the feed stock and quality decreases more problems are experienced in the roasting operation and in achieving high recoveries of contained metals. For example, roasting of zinc concentrates containing more than 5% of copper plus lead plus silica in a fluidized bed roaster is extremely difficult due to bed agglomeration.

Direct leaching of metal sulphide ores or concentrate has a number of advantages over conventional processing routes particularly when used in combination with conventional processing. Oxidative direct leaching is a process by which, in the presence of a suitable oxidizing agent, simple metal sulphides will dissolve in mineral acids to yield a metal salt solution and elemental sulphur.

Despite the number of oxidative direct leaching processes that have been patented and published there remain few commerical applications. The principal reasons are a combination of economic processing difficulties. High capital and operating costs have rendered many processes unattractive. Further metallurgical limitations such as metal recovery, impurity recovery, reagent consumption, byproducts, energy requirements and environmental impact have also made many processes unaceptable to industry.

The Sherritt-Gordon pressure leaching process involving autoclave treatment of zinc concentrates under oxygen pressure has recently gained commercial acceptance at two zinc plants in Canada (Trail and Timmins). However, because of plumbojarosite formation in the autoclave it is difficult to achieve an acceptable grade of lead/silver residue without (a) further treatment or (b) terminating the autoclave treatment at high acidities: the product sulphur also contains a number of deleterious impurities. An additional obvious disadvantage is also the need for expensive pressure and corrosion-resistant construction materials for the autoclaves.

The nitric/sulphuric acid system has been proposed as one method of direct leaching. In this process use is made of the reaction of MS and $NO_2$ via reactions such as:

$$MS + NO_2 + H_2SO_4 \rightarrow MSO_4 + NO + S^0 + H_2O$$

$$3MS + 2HNO_3 + 3H_2SO_4 \rightarrow 3MSO_4 + 3S^0 + 2NO + 4H_2O$$

$$MS + 2HNO_3 + H_2SO_4 \rightarrow MSO_4 + S^0 + 2NO_2 + 2H_2O$$

where M = metal e.g. Cu, Zn). the NO liberated can then be oxidized with $O_2$ for reuse and reabsorbed to form $HNO_3$ is so required. Thus, ideally the reaction is catalytic which respect to the oxidant. Unfortunately a significant amount of nitrogen dioxide enters solution as nitrate ions, and in the prior art processes cannot be completely recovered even in the presence of excess concentrate.

The high cost of the oxidant and the inability to completely remove residual nitrogen oxides from solution prior to electrowinning, have proved to be serious difficulties. Recent patents by Kennecott Copper Corporation, New York (US 4,189,461, US 4,144,310, US 4,132,758) have demonstrated that nitric acid or nitrogen dioxide are effective oxidants for use on copper concentrates and a favourable cost analysis has been published. (Nitric-Sulphuric Leach Process Improvements, D.S. Davies, et al, Mining Engineering, 1981, 1252-1258). However, nitrate levels remaining in solution after a multi-stage leach still remained high at $\geq 3.0$ g/L.

At 160-180°C and under pressure ferrous ions react with $NO_3$ -according to the equation:

$$3Fe^2 + NO_3 + 4H \rightarrow 3Fe^3 + NO + 2H_2O.$$

Kennecott have proposed an autoclave treatment of leach liquors to factilitate this reaction. However, a $NO_3$ level of ~ 500 mg/L would still remain (Nitric-Sulphuric Leach Process for recovery of copper from concentrate, H.M. Brennecke, et al, Mining Engineering, August 1981, 1259). Additional nitrate was removed during jarosite precipitation and a selenium removal precess involving treatment with elemental copper, but this still left a final nitrate level of 40 mg/L. This level of nitrate would have an extremely adverse effect on the electrolytic production of zinc metal, and therefore this process is unacceptable for the treatment of zinc sulphide containing materials.

Other authors have described processes in which as much as 40% of the input oxidant is lost. An example is a nitric acid route for processing a nickel/copper sulphide concentrate (Shukloc P.O., et al, Hydrometallurgy 1978 3(1) 55-64).

More recently, details of a nitric acid treatment of gold-bearing sulphidic concentrates have been published (G. Van Weert, K.J. Fair and J.C. Schneider, CIM Bulletin, Vol. 79 (895), p. 84, November 1986). A specially designed leach reactor (J.C. Schneider, Australian Patent, AU-A-53892/86) assists the in situ reaction of liberated NO gas with oxygen and the concentrate. The off gas is reacted with limestone to produce calcium nitrate which is recycled to the reactors. Sulphate/sulphur rather than elemental sulphur is also produced from attack on the pyrite and arsenopyrite minerals present in the gold bearing ore. In another process for treating sulphide concentrates containing silver and copper, small additions of nitric acid are used to promote an autoclave pressure leach. (J.B. Ackerman and C.S. Bucans, Minerals and Metallurgical Processing, Feb. 1986, p. 20).

A higher concentration of nitric acid has also been used to assist attack on refractory gold and silver ores, but again the reaction is carried out in an autoclave. All sulphur is also oxidized to sulphate, (R. Raudsepp, E. Peters and M.J.V. Beattie, U.S. Patent 4,647,307, 3 March 1987).

A significant drawback to the typical pressure leach treatment of zinc concentrates is the ease with which iron in many finely divided concentrates dissolves in the autoclave and then rapidly precipitates as a jarosite. The presence of alkali metal or ammonium ions in the spent electrolyte used as repulp liquor for the autoclave feed also facilitates the precipitation of jarositic materials. The result is severe contamination of the lead/silver residue remaining after dissolution of the zinc.

This adverse effect can be minimized by finishing the pressure leach reaction at a higher terminal acidity, thus keeping dissolved iron in solution. This iron has then to be precipitated in a subsequent stage, thus adding another treatment stage to the pressure leaching process.

An additional problem which may arise during pressure leaching is the procution of off-grade sulphur. Obviously, the extent of contamination of the sulphur will depend to some extent on the concentrate feed composition, but published values for sulphur produced by Sherritt-Gorden/Cominco during pilot treatment of a Canadian concentrate were 14 ppm Se, 14 ppm Te, 3 ppm As and 22 ppm Hg after single stage hot filtration. (E.G. Parker and S. Romanchuck, Proc. 109th AIME Annual Meeting, Feb 24-28, 1980, p, 407).

Because of these impurities, sulphur produced from the pressure leaching process may not be able to be sold as readily and at acceptable commercial terms compared to readily available higher grade material.

An object of the present invention is to overcome the technical difficulties encountered in existing processes, to avoid the use of high pressure autoclaves with their associated high capital cost and to achieve a cost effective procedure through recycling and regeneration of the oxidant. Further objects of the present invention in its preferred aspects are:

(a) to treat zinc sulphide containing raw materials at atmospheric pressure so as to maximize the solubility of contained zinc and other valuable metals such as copper and cadmium;

(b) to convert a major portion of the sulphide sulphur into elemental sulphur of high purity and in a form which can be readily separated from the leach solution and undissolved residue;

(c) to produce a residue containing substantially all of the lead and silver originally present in the raw materials in a form which can be readily separated from the elemental sulphur and any gangue material, and which is saleable because of its enhanced lead and silver contents;

(d) to maintain conditions in the leaching stage such that any dissolved iron is not precipitated as an insoluble material, such as jarosite, thus avoiding contamination and down-grading of the lead-silver rich residue;

(e) to minimize losses of the oxidant and to lower the nitrate content of the leach solution to an acceptably low level so that such solutions can be processed by existing procedures for the recovery of contained metal values without adverse effects; an alternative objective is that such leach solutions, after treatment to reduce residual nitrate levels, can be integrated at an appropriate point into an existing electrolytic zinc plant circuit without causing adverse effects to that circuit;

(f) to obtain optimum recovery of $NO_x$ gases evolved during the process steps by contacting them with oxygen or an oxygen containing gas and absorbing the resultant $NO_2$ gas in a suitable scrubbing liquor, thereby producing a solution containing nitric acid which can be recycled back to one or more of the process steps.

## Detailed Description of the Invention

The applicants have found that in the presence of an oxidant such as $HNO_3$, $NO_2$ gas, $NO/O_2$ gas mixtures or a nitrate salt such as $NaNO_3$ it is possible to effectively oxidise a commercial zinc sulphide concentrate containing significant levels of lead, a feed stock which may not be readily amenable to conventional fluid bed roasting. Further, it is possible to recover any lead and silver present in the original concentrate as a solid residue which represents a saleable byproduct. The elemental sulphur formed through the oxidation of sulphide sulphur is of high purity and readily saleable and can be separated from the lead residue by techniques known to those versed in the art.

We have found that it is particularly advantageous to use a two stage process for leaching zinc sulphide concentrates to maximise zinc extraction and to minimise residual nitrate levels. This is achieved by operating the two stages counter currently. Partially leached concentrates from the second stage (and a third stage if it is installed) are reacted in the first stage leach with hot acidic solution containing a realtively high concentration of $NO_3^-$ ions thereby achieving high zinc extractions. After separation of undissolved residue and elemental sulphur the first stage leach solution, containing a high concentration of $NO_3^-$ ions is reaced with an excess of fresh concentrates in the second stage so that NO gas is generated according to the following equation:

$$3ZnS + 2NO_3^- + 8H^+ \rightarrow 3Zn^{2+} + 3S^0 + 4H_2O + 2NO\uparrow$$

The evolved NO gas is then mixed with oxygen or an oxygen containing gas to convert it into $NO_2$ gas for recycle to the first stage leach.

Under certain circumstances it may be advantageous to incorporate a third leaching stage where fresh zinc sulphide concentrate is allowed to react further with second stage leach solution according to the following reaction:

$$ZnS + 2Fe^{3+} \rightarrow S^0 + Zn^{2+} + 2Fe^{2+}.$$

In this third stage most of the dissolved iron will be converted into the ferrous state. This is an advantage if the iron is subsequently to be precipitated as goethite or hematite according to known procedures, but a disadvantage if the iron is to be precipitated as jarosite. Therefore the inclusion of a third leaching stage in the process of the present invention will be dependent on the method selected to remove dissolved iron.

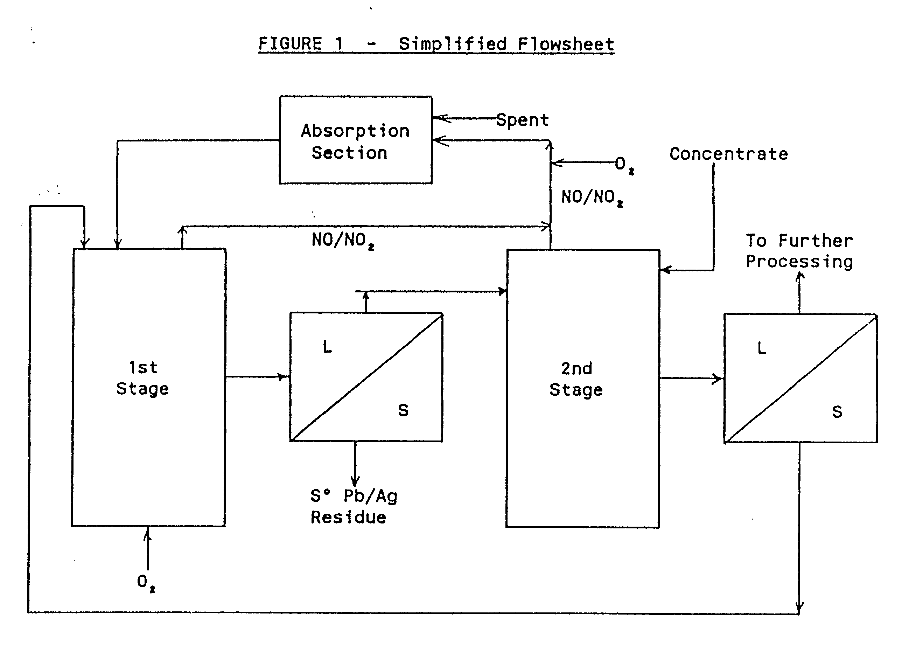

If a third leaching stage is incorporated then separation of residual solids from the second stage leach liquor is unnecessary and combined solids from both the second and third stages can be separated after the third stage and recycled back to the first stage. A preferred leaching and gas recirculation flowsheet is outlined in the drawing Figure 1.

We have found that particularly high zinc extractions can be achieved when operating the first leaching stage in a continuous manner using a series of stirred tank reactors. Typical results are illustrated in Examples 1 and 2.

However, when the second stage leach was operated in a continuous manner it was found that nitrate levels of less than about 5 g/L could not be achieved, even in the presence of a large excess of zinc sulphide concentrate (see Example 4). This unexpected result is believed to be due to an increase in the concentration of ferrous ions, which are known to combine with nitrate ions to form a stable ferrous nitrosyl complex. Surprisingly, as illustrated in Example 3, when the second stage was operated bathwise it was found that a final nitrate level of less than 1 g/L could be achieved without the use of a large excess of zinc sulphide concentrate. We therefore prefer to adopt a non-continuous, i.e. bathwise or semibatchwise mode of operation for the second stage leach. We have also found that nitrate removal in the second stage is optimised if the acidity of the first stage leach solution is terminated in the range 80-100 g $H_2SO_4$/L, and the temperature is raised to 90-95°C before the batchwise or semibatchwise addition of the concentrate is commenced. The batchwise or semibatchwise operation of the second stage leach under the conditions specified represents an important and novel aspect of the present invention.

We have also found that by injecting oxygen gas or air beneath the agitator in the first stage reactors part of the NO gas formed as a byproduct from attack of the zinc sulphide concentrate can be oxidized to $NO_2$ and reused within the reactors. However, any NO evolved from the second stage and that not reoxidized in the first stage must be trapped and fed back into the process by some means. Kennecott have advocated either conversion of the gas to nitric acid in situ or separate oxidation of NO with oxygen and resparging of the $NO_2$ back into the reators (Nitric-Sulphuric Leach Process Improvements, D.S. Davies, et al, Mining Engineering, 1981, 1252-1258). We have found that the first alternative is not entirely effective at the reactor temperatures required in the first leaching stage and that the second alternative, involving collection, cooling and reoxidation of large volumes of $NO_x$ gases would present serious operating problems.

In contrast, we have found that it is possible to oxidize NO gas with oxygen gas and absorb the resulting $NO_2$ gas in a conventional unpacked spray tower, using zinc plant spent electrolyte as the scrubbing solution (see Example 7). Over 99% of the $NO_2$ gas can be stripped from the gas stream and converted into a dilute nitric acid solution in zinc plant spent electrolyte.

This result is only possible if sufficient oxygen is present in the gas stream to oxidize any NO present in the off-gas as well as the additional NO generated during production of $HNO_3$ via the reaction:
$$3NO_2 + H_2O \rightarrow 2HNO_3 + NO.$$

The use of acidic spent electrolyte as the carrier for recycled $NO_2$ is very convenient because the spent electrolyte, generated during recovery of zinc by electrolysis, has to be added to the first stage leach reactors to act as the leachant for the zinc sulphide concentrate.

This is also a distinct advantage in using a commercial grade of oxygen (containing typically 95% or better of $O_2$) rather than, for example air, as the source of oxygen, as apart from the small amount of impurity gases entering with the oxygen there will be very little off gas requiring scrubbing to meet environmental constraints. The final scrubbing of the off gases can be most conveniently carried out for example with a bleed of third stage leach solution which contains a high concentration of ferrous ions. Alternatively a separate source of ferrous sulphate solution can be used to remove $NO_x$ gas as described previously. (W. Kristof and P. Koehler, Ger. Offen. DE 3,406,085, 22 August 1985; S. Boslo et al., Ind. Eng. Chem. Process Des. Dev., Vol. 24, No. 1, 1985).

While there are distinct advantages to be gained from using commercial grade oxygen as the oxidant for NO gas, the process of the present invention is not restricted to commercial grade oxygen. Thus, under certain circumstances it may be preferably to use air rather than commercial grade oxygen, in which case prior compression of the $NO_x$ gases and air before scrubbing of the resultant $NO_2$ gas in the spray towers would be advantageous. In this case operating the absorption towers above atmospheric pressure would probably be necessary.

The residual first stage leach solids will contain both elemental sulphur and a lead/silver residue. Separation of these two components must be achieved to provide marketable products. It is shown in Examples 9(a) and 9(b) the both flotation and hydrocyclone classification can be used to separate and recover the two fractions while a high grade elemental sulphur may be generated by melting and filtering the sulphur concentrate. The purity of the elemental sulphur so produced is equal to or of higher purity than elemental sulphur produced via the pressure leaching route.

Under optimum operating conditions in the second stage leach, nitrate levels of <1 g/L are produced. However, to avoid problems during the electrolytic recovery of zinc, nitrate levels of less than about 1 mg/L are necessary. We have found that this can be achieved by use of a suitable reducing agent.

It is well known that nitrate may be reduced by certain metals or alloys, but in neutral or acidic solution, reduction normally only proceeds as far as the nitrite ion, and this observation has been used for analysis of nitrate ions in waste water (J.H. Margeson, J.C. Suggs, M.R. Midgett, Anal. Chem. 1980, 52, 1955-157 - Reduction of Nitrate to Nitrite with Cadmium). However, we have discovered that in solutions of high ionic strength, such as the leach liquors generated in the present process, the addition of metallic zinc results in substantially complete reduction of nitrate, nitrogen and ammonia being the principal products. Although zinc dust or finely divided cementates containing zinc or copper-activated cadmium are very effective reductants, zinc dross or zinc prills can also be used and would represent a cheaper alternative. The use of various reductants is illustrated in Example 8.

Continuous pilot plant testing of the leaching and gas recirculation/recovery sections of the flowsheet has been undertaken. During this work it was found that the concentration of ammonium ions in the spent electrolyte must be kept low, preferably <0.5 g $NH_3$/L. otherwise nitrite ion, which is generated as an intermediate during reduction of the nitrate with concentrate during leaching reacts with ammonium ions forming nitrogen gas and this represents an unacceptable loss of nitrogen from the system.

Ammonium ions are present in the Risdon zinc plant circuit solutions since ammonia is deliberately added in another section of the main plant to precipitate jarosite. However, sodium ions could be readily substituted for ammonium ions for this purpose, and this is common practice in many zinc plants around the world. The results of pilot plant testwork employing ammonia-free solutions are included in Example 10. In this example it was shown that zinc extractions in excess of 95% may be achieved and that an acceptable grade of lead residue and elemental sulphur may be generated by further processing of the leach residue. A residual nitrate level in product leach solution of no more than 1.0 g/L was obtained. Electrolysis of the leach solution after purification by conventional means and removal of nitrate yielded a current efficiency of 91%. In other examples zinc extractions greater than 99.5% have been achieved.

In order to minimize the requirements of reducing agents, such as zinc dust, it is necessary to neutralise acid present in leach liquor leaving the second stage (or third stage if one is included) of the process. In so doing dissolved iron will be precipitated and as indicated earlier several alternative flowsheet arrangements are possible, the main difference being the form in which the iron is to be precipitated.

At least three conceptual flowsheets are possible depending on the form in which iron is to be precipitated. These are, precipitation of iron as goethite, hematite or jarosite, using well known procedures, but the present invention is not limited to these particular circuits.

In two of the three circuits (in which iron is precipitated as geothite or hematite) it is advantageous for iron in solution entering the iron precipitation stage to be present in the ferrous state. Therefore for these flowsheets there is an advantage to be gained by incorporating a third leach stage. Solution leaving such a stage can then be neutralized with a suitable neutralizing agent, such as zinc oxide calcine, to produce a leach solution of low acidity in which most of the iron is present in the ferrous state. It is well known to those skilled in the art, that such solutions are eminently suitable as feed to a goethite or hematite precipitation step.

Another advantage of these two circuits is that the opportunity exists for inclusion, if required, of an arsenic removal step, ahead of the iron precipitation step using well known procedures.

Alternatively, if it is intended to precipitate dissolved iron as a jarosite compound than inclusion of a third stage leach is unnecessary and it is preferable to include a preneutralization stage in which zinc oxide calcine or an alternative neutralizing agent is used to neutralize excess acidity ahead of the jarosite precipitation stage.

Irrespective of the iron precipitation method employed it is preferable for the nitrate reduction stage to be incorporated after the iron removal stage. It is envisaged that the process of the present invention would be most suited to expansion of, or incorporation into an existing roast-leach-electrowin operation in which case the existing zinc dust purification sections of the main electrolytic zinc plant circuit can be used as the nitrate reducing step.

Although the process of the present invention is particularly applicable to the leaching of high grade zinc sulphide concentrate, with treatment of the resultant leach solution in an electrolytic zinc plant circuit, in no way is the process limited to this particular arrangement and raw materials. We have found, for example, that the process can with advantage be used for the treatment of bulk concentrates, and it should also be applicable to fine grained complex ores. In these cases, however, the operating conditions, the fineness of the raw materials and the subsequent treatment of the leach solutions to recover metal values have to be modified to suit the particular raw materials and to maximise the extraction and recovery of dissolved valuable metals.

In its most general form the process of the present invention is concerned with recovering valuable metals from metal sulphide containing ores or concentrates with the simultaneous production of elemental sulphur and a high grade residue containing enhanced levels of valuable metal such as lead, silver and gold characterized by leaching counter currently in at least two stages the metal sulphide containing material in a dilute sulphuric acid solution in the presence of an oxidizing agent containing oxides of nitrogen and an oxygen containing gas at a temperature not exceeding the boiling point of the solution at atmospheric pressure, recovering any evolved gases by scrubbing said gases with tank house spent electrolyte preferably at atmospheric pressure and passing the dilute nitric acid/sulphuric acid solution so produced to the first stage leach, separating undissolved residue and elemental sulphur from the first stage leach solution and contacting said first stage leach solution with fresh concentrate, semibatchwise, at a temperature not exceeding the boiling point at atmospheric pressure thereby producing a leach solution containing a low concentration of nitrate ions, and after separation from partially leached metal sulphide containing ores or concentrates which are recycled bach to the first stage leach, said low nitrate containing solution is treated by conventional procedures to precipitate dissolved iron and which, after separation from the precipitated iron, is contacted with a metallic reductant thereby producing a leach solution substantially free of nitrate ions, followed by recovery of dissolved metal values by conventional electrolytic procedures.

In a preferred embodiment the oxidant used in the process consists of nitrogen dioxide gas, nitric acid, a mixture of nitric oxide and oxygen containing gas or a salt of nitric acid or any combination of the aforesaid oxidants.

The invention may also include any of the following preferred embodiments:

(1) the concentration of sulphuric acid in the tank house spent electrolyte passing to the first stage leach lies in the range 50-250 g/L;

(2) the concentration of oxidant used in the leaching stages lies in the range 0.5-120 g $NO_3$ /L;

(3) the first stage leach solution is contacted with partially leached ores or concentrates recycled from the second stage leach in the presence of the oxidant for a period of between 2-12 hours at a temperature not exceeding the boiling point at atmospheric pressure preferably in a series of covered stirred tank reactors operating continuously;

(4) the concentration of sulphuric acid in solution leaving the first stage leach lies in the range 80-110 g $H_2SO_4$/L and that of nitrate 20-60 g $NO_3$/L;

(5) sparging oxygen or oxygen containing gas beneath the impellers in the first stage leach reactors so that part of the oxides of nitrogen gas generated from the nitric acid solution added to this stage is oxidized to nitrogen dioxide gas which is then reabsorbed in solution to react further with the metal sulphide concentrate;

(6) the second stage leach is conducted batchwise involving the following sequence of operations:

(a) partially filling a convered stirred tank reactor with first stage leach solution, leaving sufficient space above the solution level for froth containment and heating said solution to a temperature greater than 85°C;

(b) adding, over a period of from 5 to 25 minutes, a calculated excess of concentrates in a controlled but variable manner, the rate of addition being adjusted to maintain a brisk evolution of gases but avoiding excessive formation of froth;

(c) maintaining the stirred reaction mixture at a temperature above 85°C for a further period of 10-90 minutes before emptying the reactor and repeating the above sequence of operations;

(7) providing a means of mixing the oxides of nitrogen gases evolved from the second stage reactors with oxygen or oxygen containing as, thereby favouring the formation of nitrogen dioxide gas;

(8) providing a means for mixing the oxides of nitrogen/oxygen gas mixture derived from the second stage batch leach with the gas mixture evolved from the first stage leach reactors and contacting said gas mixtures with tank house spent electrolyte, preferably in a series of spray towers operating counter currently so that the nitrogen dioxide formed in the gas mixture is absorbed in the tank house spent electrolyte thereby forming a dilute nitric acid/sulphuric acid solution which then passes to the first stage leach reactors;

(9) providing a means for separating partially leached metal sulphide containing solids from the second stage leach solution and recycling said solids to the first stage leach;

(10) providing a means for separating undissolved solids and elemental sulphur from the first stage leach solution and separating said solids from elemental sulphur by known techniques such as flotation and treatment with hydrocyclones.

(11) after precipitation and separation of dissolved iron by known procedures the leach solution is contacted with a metallic reductant in the presence of added acid, thereby producing a leach solution substantially free of nitrate ions from which dissolved metal values are recovered by conventional electrolytic procedures.

In a further preferred embodiment the process of the present invention is concerned with the leaching of zinc sulphide concentrate, in electrolytic zinc plant spent electrolyte containing dilute nitric acid formed by scrubbing nitrogen dioxide gas generated by oxidizing oxides of nitrogen gas evolved from the leach reactors with commercial grade oxygen gas. any losses of nitric acid being made up by the addition of a nitrate salt such as sodium nitrate, precipitating and separating dissolved iron as a jarosite compound thereby producing a leach solution which is treated with zinc dust to reduce nitrate levels to acceptably low levels such that the dissolved zinc can be recovered electrolytically at a high current efficiency in a conventional electrolytic zinc plant circuit, while at the same time producing a high grade lead. silver containing residue and elemental sulphur, also of high grade, both of which can be sold or further processed.

## Examples

The process of the present invention is illustrated by the following non-limiting examples.

The concentrate used throughout these examples is as received zinc concentrate, generated at the Elura mine of the Electrolytic Zinc Company of Australasia Limited (E.Z.).

Unless stated otherwise all solutions used in these examples were typical zinc plant solutions collected from the Risdon plant of E.Z.

## Example 1

### First Stage Leach

This example illustrates the zinc extraction and metal recoveries obtainable from direct leaching of zinc concentrate with $HNO_3/H_2SO_4$ solution in the first stage leach.

In a continuous first stage leach, partially leached zinc concentrate was oxidized in acidified spent electrolyte to which $HNO_3$ (43 g/L) had been added. A solids loading of 75 g/L, a temperature of 85°C, a solution feed flowrate of 2 L/hr and a residence time of 8 hours in 4 stirred reactors were used.

The following results were achieved:

| | Composition | | |
|---|---|---|---|
| | Feed | Residue | Extraction (%)* |
| | (partially leached solids) | | |
| Zn | 27.2 | 1.1 | 99.45 |
| Fe | 8.2 | 0.5 | 98.97 |
| S/S | 16.8 | 0.7 | ** |
| S$^o$ | 31.2 | 76 | |
| Pb | 7.6 | 14.0 | *** |

* Back calculated from concentrate used in second stage. Concentrate analysis appears in Example 3.
** 22% conversion of sulphide sulphur to sulphate ($SO_4^{2-}$).
*** Assumes no extraction of lead into solution (solubility of $PbSO_4$ is 0.04 g/L).

From the above results it can be calculated that complete separation of elemental sulphur from the residual solids would result in the production of a lead/silver residue containing 58% Pb, a very saleable product.

## Example 2

First Stage Leach

This example illustrates typical changes in solution composition which occur in a first stage leach of partially leached zinc sulphide concentrates using 4 stirred tank reactors in series, with injection of commercial oxygen gas beneath the impellers.

The composition of the starting solution was:

$H_2SO_4$* 202.4 g/L

Zn 45 g/L

$Fe^3$ < 5 mg/L

$NO_3$ 742 43 g/L

* includes $HNO_3$

This is typical of a sample of spent electrolyte returning from the electrolysis section of E.Z. Co.'s electrolytic zinc plant after it has been used to absorb the $NO_2$ produced from oxidation with oxygen of NO gas liberated from the first and second stage reactors.

After leaching under the following conditions:

temperature 85°C

solids loading 75 g/L

residence time 8 hours

total $O_2$ flowrate 560 mL/min

solution flowrate 2 L/hour

agitator speed 800 r.p.m.

4 x 4 L scale stirred tank reactors connected in series

and separation of undissolved solids and elemental sulphur, the solution from the fourth stirred tank reactor had the following composition:

$H_2SO_4$* 170 g/L

Zn 70 g/L

$Fe^2$ < 5 mg/L

$Fe^3$ 4 g/L

$NO_3$ 26 g/L

* includes $HNO_3$


Example 3

Second Stage Leach

This example demonstrates the second stage leach in which solution from Example 2 was contacted with fresh concentrate in a batch reactor. The concentrate was added to the reactor over a period of 10 minutes and after a further 80 minutes reaction the partially leached solids were separated from the solution and returned to the first stage. The $NO/NO_2$ gas mixture evolved from the second stage leach was reacted with $O_2$ to convert all the oxides of nitrogen completely into $NO_2$, which was then absorbed into spent electrolyte.

The following experimental conditions wee employed:

temperature 95°C

solids loading 100 g/L

agitator speed 800 r.p.m.

single 3 L stirred tank reactor.

Solid and solution analyses were as follows:

9

| | Solids (%) | | | Solution (g/L) | |
|---|---|---|---|---|---|
| | Fresh Concentrate | Partially Leached Residue | | | |
| Zn | 48.1 | 33.6 | $H_2SO_4$ | | 109.4 |
| Fe | 11.1 | 8.0 | Zn | | 81.9 |
| S/S | 30.6 | 18.6 | $Fe^{2+}$ | | 0.4 |
| $S^O$ | 0 | 25.7 | $Fe^{3+}$ | | 11.4 |
| Pb | 3.9 | 5.4 | $NO_3^-$ | | 0.35 |

This example demonstrates that nitrate levels of <1 g/L can be achieved with only partial dissolution of the added zinc sulphide concentrate.

## Example 4

### Second Stage Leach

This example demonstrates the second stage leach when operated in a continuous manner.
The following experimental conditions were employed:

temperature        95°C
solids loading     100 g/L
residence time     12 hours
total $O_2$ flowrate   2 L/min
solution flowrate  500 mL/hour
agitator speed     800 r.p.m.
3 x 2 L stirred tank reactors connected in series.
The average analyses of solids and solution leaving the third reactor were as follows:

| | Solids (%) | | Solution (g/L) | |
|---|---|---|---|---|
| Zn | 3 | $H_2SO_4$* | | 10-50 |
| Fe | 4 | Zn | | 70-95 |
| S/S | 4 | $Fe^{2+}$ | | ~2 |
| $S^O$ | 70 | $Fe^{3+}$ | | 11 |
| Pb | 9.5 | $NO_3^-$ | | 5-12 |

* includes $HNO_3$.

This example demonstrates that although significant attack of the zinc sulphide concentrate has occurred, residual nitrate levels are unacceptably high.

## Example 5

### Third Stage Leach

This example demonstrates the third stage leach. The solution from Example 3 was contacted with fresh zinc concentrate to convert the ferric iron to ferrous iron according to the following equation:
$$ZnS + 2Fe^3 \rightarrow S^O + Zn^2 + 2Fe^2.$$
In addition, a small quantity of acid was also consumed probably via the following reaction:
$$ZnS + H_2SO_4 + \tfrac{1}{2}O_2 \rightarrow ZnSO_4 + S^O + H_2.$$

The following experimental conditions were employed:

temperature      85-95°C
solids loading     50 g/L
residence time    6 hours
total air flowrate   1.5 L/min
solution flowrate   2 L/hour
agitator speed    800 r.p.m.
3 x 4 L reactors in series

Analyses of solids and solution leaving the third reactor were as follows:

| Solids (%) | | Solution (g/L) | |
|---|---|---|---|
| Zn | 40 | $H_2SO_4$ | 100 |
| Fe | 12 | Zn | 90 |
| S/S | 26 | $Fe^{2+}$ | 11 |
| $S^O$ | 13 | $Fe^{3+}$ | 0.8 |
| Pb | 3.5 | $NO_3^-$ | 0.3 |

This example illustrates negligible reduction in the nitrate level, a small drop in sulphiric acid concentration and major reduction of ferric to ferrous iron.

Example 6

An extensive analysis was carried out on a two stage leach, both stages being operated batchwise, to determine the fate of minor elements.

Nitric oxide and oxygen gas were used as the oxidant which was sparged into the first stage reaction vessel - a 5 litre stirred tank reactor. The first stage was operated at 85°C for 4 hours using solids recycled from the second stage. The second stage leach was operated at 95°C using stockpiled first stage leach filtrate to which was added steadily over a period of 30 minutes 150 g/L of fresh zinc concentrate.

The second batch leach was then continued for a further 1 hour before the solids were separated off by filtration.

Comprehensive assays of the leach solutions and solids are listed below:

| Spent Electrolyte | | First Stage Leach Solution | |
|---|---|---|---|
| $H_2SO_4$ | 182.8 g/L | $H_2SO_4 + HNO_3$ | 193.6 g/L |
| $NO_3^-$ | 1.8 mg/L | $NO_3^-$ | 26.6 g/L |
| Zn | 48.7 g/L | Zn | 58.7 g/L |
| Fe | 3.2 mg/L | Fe | 2.4 g/L |
| As | 0.01 mg/L | As | 110 mg/L |
| $SiO_2$ | 0.13 g/L | $SiO_2$ | 0.14 g/L |
| Cu | < 0.01 mg/L | Cu | 75 mg/L |
| Cd | 0.9 mg/L | Cd | 30 mg/L |
| Co | 3.3 mg/L | Co | 5.3 mg/L |
| Ni | 0.1 mg/L | Ni | 0.9 mg/L |
| Sb | 0.01 mg/L | Sb | 12 mg/L |
| Mn | 3.4 g/L | Mn | 2.7 g/L |
| Mg | 5.2 g/L | Mg | 4.9 g/L |
| Cl | 130 mg/L | Cl | 130 mg/L |
| F | – | F | 13 mg/L |

## First Stage Leach Solids

| Feed Solids | | Residue | |
|---|---|---|---|
| T/Zn | 25.2 % | T/Zn | 7.2 % |
| T/Fe | 5.9 % | T/Fe | 3.1 % |
| S/S | 12.7 % | S/S | 1.3 % |
| $S^O$ | 36.1 % | $S^O$ | 59.0 % |
| As | 0.35 % | As | 0.06 % |
| Pb | 8.4 % | Pb | 10.4 % |
| $SiO_2$ | 0.6 % | $SiO_2$ | 0.8 % |
| Cu | 0.21 % | Cu | 0.13 % |
| Cd | 0.05 % | Cd | 0.02 % |
| Co | 0.0004 % | Co | 0.0002 % |
| Ni | 0.0001 % | Ni | 0.005 % |
| Ag | 205 g/t | Ag | 250 g/t |
| Sb | 0.014 % | Sb | 0.011 % |
| Mn | 0.001 % | Mn | 0.002 % |
| MgO | 0.004 % | MgO | 0.007 % |
| Cl | 0.001 % | Cl | 0.003 % |
| F | 0.005 % | F | 0.004 % |
| Hg | 70 g/t | Hg | 250 g/t |

## Second Stage Leach Solution

| Feed Solution | | | Residue | | |
|---|---|---|---|---|---|
| $H_2SO_4 + HNO_3$ | 207.2 | g/L | $H_2SO_4 + HNO_3$ | 104.0 | g/L |
| $NO_3^-$ | 35.0 | g/L | $NO_3^-$ | 0.8 | g/L |
| Zn | 53.6 | g/L | Zn | 94.2 | g/L |
| Fe | 1.3 | g/L | Fe $3.2(^{3+})$ | $6.5(^{2+})$ | g/L |
| As | 15 | mg/L | As | 345 | mg/L |
| $SiO_2$ | 0.13 | g/L | $SiO_2$ | 0.14 | g/L |
| Cu | 26 | mg/L | Cu | 230 | mg/L |
| Cd | 15 | mg/L | Cd | 125 | mg/L |
| Co | 4.8 | mg/L | Co | 3.8 | mg/L |
| Ni | 0.5 | mg/L | Ni | 0.8 | mg/L |
| Sb | 9.0 | mg/L | Sb | 25.0 | mg/L |
| Mn | 3.2 | g/L | Mn | 2.4 | g/L |
| Mg | 4.8 | g/L | Mg | 4.5 | g/L |
| Cl | 130 | mg/L | Cl | 120 | mg/L |
| F | 20 | mg/L | F | 4 | mg/L |

13

## Second Stage Leach Solids

| Concentrate | | | Residue | | |
|---|---|---|---|---|---|
| T/Zn | 45.1 | % | T/Zn | 25.2 | % |
| T/Fe | 9.0 | % | T/Fe | 5.9 | % |
| S/S | 25.5 | % | S/S | 12.7 | % |
| $S^o$ | – | % | $S^o$ | 36.1 | % |
| As | 0.33 | % | As | 0.35 | % |
| Pb | 3.6 | % | Pb | 8.4 | % |
| $SiO_2$ | 0.4 | % | $SiO_2$ | 0.6 | % |
| Cu | 2.4 | % | Cu | 0.21 | % |
| Cd | 0.1 | % | Cd | 0.05 | % |
| Co | 0.0005 | % | Co | 0.0004 | % |
| Ni | 0.0001 | % | Ni | 0.0001 | % |
| Ag | 95 | g/t | Ag | 205 | g/t |
| Sb | 0.023 | % | Sb | 0.014 | % |
| Mn | 0.01 | % | Mn | 0.001 | % |
| MgO | 0.03 | % | MgO | 0.004 | % |
| Cl | 0.002 | % | Cl | 0.001 | % |
| F | 0.01 | % | F | 0.005 | % |
| Hg | 76 | g/t | Hg | 70 | g/t |

Example 7

Recycle of Oxidant

Off-gas produced in the leach reactors was simulated by using pure NO gas from a cylinder. Commercial grade oxygen gas was also used.

The experimental set-up consisted of a gas premixing vessel (5 L) connected to two void spray towers connected in series (20 L and 11 L capacity, respectively). Constant volumes of spent electrolyte (5 L and 3 L, respectively) were recirculated separately over each tower at a rate of 30-50 L/min. The temperature of gas in the premixing vessel was 70°C. The temperature of the spent electrolyte was 30°C.

Oxygen gas (5.5 L/min) and NO gas (7.5 L/min) were premixed and were scrubbed in the two towers over a period of 1 hour to give a nitrate level of 238.1 g/L. This level is comparable, within an experimental error of ±5%, to the theoretical nitrate ion concentration of 227.8 g/L which would be obtained if there was complete absorption.

Example 8

Removal of Nitrate from the Leach Solution

The leach solution, after removal of iron and other impurities such as arsenic, must be further purified prior to electrolysis for recovery of zinc. Apart from nitrate ion, other minor metallic impurities such as Cu and Cd must also be eliminated.

14

(a) <u>Test 1</u>:

In the following expreiment zinc dust was added to precipitate Cu according to the process described in Australian Patent No. 536,376, and at the same time sufficient zinc dust and acid were also added to facilitate removal of nitrate.

The purification was carried out in 3 x 6 L continuously operated stirred tank reactors at a temperature of 80°C and solution flow rate of 18 L/h. The impure solution contained $CU^2$ (320 mg/L), $Cd^2$ (215 mg/L), $Zn^2$ (150 g/L) and $NO_3$ (0.953 g/L) and additional sulphuric acid was added to raise the acidity to 7.0 g $H_2SO_4/L$.

Zinc dust was metered into the first reactor with the solution at a rate of 150 g Zn/hour corresponding to an 8:1 mole ratio of zinc to nitrate ion. After equilibration and filtration the product solution gave the following analysis: 0.6 mg Cu/L, 200 mg Cd/L and < 5 mg $NO_3$ /L (which is below the lower limit of detection using a U.V. absorption analytical method).

(b) <u>Test 2</u>:

In an additional experiment, it was shown that zinc prills packed into a column rector were also effective in removing nitrate ion as well as Cu and Cd.

Thus, impure solution containing 420 mg Cu/L, 210 mg Cd/L, 1.21 g $NO_3$ /L and 7.0 g $H_2SO_4/L$ was pre-heated to 80°C and continuously pumped at 4 L/h through a heated 4 L plastic column rector containing 10 kg of zinc prills. Over a 48 hour period filtered solution of the following composition was obtained: 2 mg Cu/L, 3.4 mg Cd/L and < 5 mg $NO_3$ /L (which is below the detection limit for $NO_3$ using a U.V. absorption analytical method).

(c) <u>Test 3</u>:

The variation of rate of nitrate removal with zinc dust loading was measured with the following results:

| Test No. | Approximate* Rate Constant for $N_3^-$ Removal $(min^{-1})$ | Zinc Dust Loading g/L |
|---|---|---|
| 1 | 0.0867 | 0.6 |
| 2 | 0.1600 | 1.2 |
| 3 | 0.1767 | 1.5 |
| 4 | 0.2222 | 2.0 |

* pseudo first order rate constant obtained from the initial slopes of the plots of $-ln\frac{C_t}{C_0}$ against t, where $C_t$ = $NO_3$ level at time, t, and $C_0$ = $NO_3$ level at time $t$ = 0. The initial solution composition was: Cu 225 mg/L, Cd 300 mg/L, Co 35 mg/L, Zn 120 g/L, $NO_3$ 300 mg/L (doped with $NaNO_3$).

The almost linear increase in rate constant observed with increase in zinc dust suggests that the rate of reduction probably depends on the available surface area of the zinc dust. Thus, a system utilizing a very high loading of zinc dust, for example, a column packed with zinc dust or prills, would be expected to be highly efficient, as shown by the results of Test 2, above.

(d) <u>Test 4</u>:

This example shows that cadmium, in the presence of copper can also act as a powerful reductant.

15

(a) <u>Copper-Coated Cadmium Metal</u> Cadmium metal filings were cleaned with zinc plant spent electrolyte, washed with water than stirred in a 10% $CuSO_4$ solution until the cadmium blackened. Addition of this alloy (3.5 g/L) to plant cell feed solution doped with $NaNO_3$ (300 mg $NO_3$ L) and reaction for 1 hour at 85°C resulted in removal of 98.4% of the $NO_3$ with formation of only a trace of $NO_2$ .

(b) <u>Copper/Cadmium Cementate</u> In many zinc plants a two stage zinc dust purification of leach liquors is carried out to remove metallic impurities prior to electrolysis of these liquors. In one such process copper and cadmium are removed together and the cementate filtered off prior to the second stage (see, for example, Australian Patent Application No. 47932/72). The Cu/Cd cementate proved to be an active reductant for nitrate as shown by the following test results:

| Test No. | Solution* | Temp (°C) | Time (h) | Wet Cu/Cd** Cementate (g/L) | Final Solution Composition (mg/L) | | $NO_3^-$ Removal (%) |
|---|---|---|---|---|---|---|---|
| | | | | | $NO_3^-$ | $NO_2^-$ | |
| 1 | Plant cell feed | 65 | 1 | 3.5 | 1.8 | < 0.1 | 99.4 |
| 2 | Plant cell feed | 45 | 2 | 3.5 | < 5 | < 0.1 | > 98.3 |

\* Composition: Cu 0.02 mg/L, Cd 0.3 mg/L, Co 10 mg/L, Zn 120 g/L, $NO_3$ 300 mg/L (doped with $NaNO_3$).

\*\* Prepared by addition of zinc dust in 120% stoichiometric quantity to a solution containing Cu (2.5 g/L) and Cd (3.5 g/L) followed by reaction for 1 hour. The cementate produced was removed by filtration, washed and used immediately to minimize aerial oxidation.

The removal of nitrate, shown by the above examples to proceed both in acidic or neutral zinc sulphate solutions, is unexpected and is neither known nor predicted from the prior art.

The exact mechanism of nitrate reduction appears to be complex, but it is known that ammonia is a product and that the reaction is assisted by the addition of acid. The reaction therefore appears to be at least partly of the form:

$$NO_3^- + 4Zn^0 + 10H^+ \rightarrow NH_4^+ + 4Zn^{2+} + 3H_2O.$$

The reaction of zinc dust or cementates with nitrate also appears to generate nitrite as an intermediate in quantities which depend on the reductant used. If ammonium ions are also present and the solution is acidic there is also a strong likelihood that nitrogen gas will also be generated via the reaction:

$$NH_4^+ + NO_2^- \rightarrow N_2 + 2H_2O$$

(J.H. Dusenbury and R.E. Powell, Reactions of Nitrous Acid 1. Ammonium Nitrite Decomposition, Journal Americal Chemical Society, Vol. 73, July 1951, p. 3266).

Nitrogen gas has in fact been detected in the gas phase and it has been found that treatment of an acidic nitrate-doped zinc sulphate solution with zinc dust results in approximately 50% of the nitrate forming $NH_4^+$ ions and 50% forming $N_2$ (gas).

The reaction of $NH_4^+$ with $NO_2^-$ also has implications in the concentrate leach process (see later under Example 10).

<u>Example 9a</u>

Flotation of First Stage Residual Solids

This example illustrates the separation and recovery of elemental sulphur and lead/silver residue fractions from the 1st stage residual solids by flotation.

Washed and dried 1st stage residual solids (225 g) were suspended in water (1.5 litres) in a 2 litre laboratory flotation cell. Flotation was carried out without reagents at a pH of 5, using an input air flow at the cell of 0.5 L/min. The overflow from the cell, the elemental sulphur concentrate, was collected and dried. After flotation was complete, the pulp remaining in the cell was collected, filtered and was dried to afford the lead/silver residue. A portion of the elemental sulphur concentrate was melted at 140° and was filtered under vacuum. The filtrate, consisting of purified elemental sulphur was collected and was allowed to cool and solidify. The following analytical results were achieved:

| Element | Composition (%) | | | |
| | Leach Residue (before flotation) | Sulphur Concentrate (after flotation) | Pb/Ag Residue (after flotation) | Pure Sulphur (after hot filtration) |
| --- | --- | --- | --- | --- |
| $S^o$ | 76.5 | 87.4 | – | 99.9 |
| Pb | 10.1 | 4.0 | 58.7 | 0.005 |
| Hg | 230 ppm | 250 ppm | 20 ppm | 8 ppm |
| As | 0.014 | 200 ppm | 600 ppm | 1 ppm |
| Se | < 0.0001 | 4 ppm | – | 1 ppm |
| Ag | 630 g/t | – | 440 g/t | – |
| Au | 2 g/t | – | 0.8 g/t | – |

Example 9b

Hydrocyclone Classification of First Stage Residual Solids

This example illustrates the separation and recovery of elemental sulphur and lead/silver residue fractions from the 1st stage solids by hydrocyclone classification.

Washed and dried 1st stage solids (160 g) were suspended in water with a little detergent added, and this pulp was introduced into a bank of 5 hydrocyclones connected in series. The underflow from each hydrocylone, the elemental sulphur concentrate, and the overflow from the band of hydrocyclones, the lead/silver residue, were collected and were dried. A portion of the element sulphur concentrate, corresponding to a particle size range of approximately 20 to 30 μm was melted at 140° and was filtered under vacuum. The filtrate, consisting of purified elemental sulphur was collected and was allowed to cool and solidify. The following analytical results were achieved:

| Element | Composition (%) | |
| --- | --- | --- |
| | Sulphur Concentrate | Pure Sulphur |
| S$^{\circ}$ | 83.6 | 99.7 |
| Pb | 3.4 | 0.006 |
| Hg | 175 ppm | 8 ppm |
| As | 0.02 | 1 ppm |
| Se | 2 | 1 ppm |

A similar sample of lead/silver residue produced by hydrocyclone classification of 1st stage residual solids was found to contain 55.8% Pb, 0.06% As and 95 ppm Hg.

Example 10

Continuous Pilot Plant Testwork

A small scale pilot plant was constructed and operated to test two of the three leaching stages and gas recirculation/absorption steps.

The equipment was sized to process 3.2 kg of zinc concentrate/h at a spent electrolyte flow rate of 20 L/h. The two leaching stages and gas absorption stage are briefly described as follows:

First stage leach:

4 x 40 L stirred reactors.
Oxygen injection beneath impellers.

Second stage leach: 2 x 100 L stirred reactors.
(Batch, sequential operation).

Absorption towers: 2 x 0.26m$^3$ unpacked spray towers, equipped with liquor recycle about each tower.

Vessels of 250 L capacity were provided for interstage pulp/solution storage and 2 x 10 m$^3$ vessels were used for storage of product solution and feed spent electrolyte.

Vessels in the first and second stages were provided with gas vents and ducting to the absorption towers and each vessel was made air-tight and equipped with water seals about the impeller shafts. The majority of the pilot plant vessels were constructed in FRP with 316 L stainless steel internals. Reactors were fitted with coils through which steam or cooling water could be circulated.

The absorption towers were operated counter-currently with respect to spent electrolyte and gas flow. A small fan on the vent gas maintained a small negative pressure on the towers. Flows of gas from each reactor were monitored and the oxygen input adjusted as required to maintain maximum oxidation of nitric oxide.

Liquid-solid separation between the first and second stages was achieved with a 0.10m$^3$ capacity plate and frame filter press and after the second stage with a 0.3 m diameter "Enviroclear" thickener.

Pulps and solids were metered to the reactors using equipment designed to prevent any loss of gas from the system.

General control of the pilot plant was provided by a Fox 3 computer. Operating conditions were chosen on the basis of the best results of batch tests (see Examples 2, 3 and 4). Elura zinc concentrate was used as feed material to the pilot plant and both a synthetic spent electrolyte and spent electrolyte obtained from the Risdon Zinc Plant were each employed in separate test runs.

When Risdon zinc plant spent electrolyte was employed gas chromatographic mass spectral analysis of the gases evolved from the first stage reactors showed the presence of a significant amount of nitrogen gas. This was found to be due to reaction of ammonium ions present in the plant solution with nitrite generated as an intermediate from the reaction of concentrate with the leach solution. Up to 20% of the nitrate entering the first stage was lost in this way while the ammonium ion level was reduced from 4.3 g/L to approximately 0.5 g/L.

Synthetic, ammonia-free spent electrolyte containing only zinc sulphate and sulphuric acid was then employed. Typical results obtained from the pilot plant run over a continuous five day period are summarized as follows:

Zinc concentrate composition (%):  Zn  47.3  $SO_4/S$  2.9

Fe  11.8

Pb  3.4

S/S  32.3

Spent electrolyte composition
after $NO_x$ gas absorption (g/L):  Zn  40

$H_2SO_4$  169.2

$NO_3^-$  57.6

Stage 1 exit:

| | Solution (g/L) | | Solids (%) |
|---|---|---|---|
| Zn | 53.2 | Zn | 4.9 |
| $Fe^{3+}$ | 6.4 | Fe | 1.2 |
| $H_2SO_4$ | 131.2 | Pb | 9.3 |
| $NO_3^-$ | 41.6 | $S^O$ | 76.8 |
| | | Ag | 420 g/tonne |
| | | Au | 0.4 g/tonne |

Stage 2 exit:

| | Solution (g/L) | | Solids (%) | |
|---|---|---|---|---|
| Zn | 84.5 | Zn | 35.8 |
| $Fe^{2+}$ | < 0.1 | Fe | 9.0 |
| $Fe^{3+}$ | 13.6 | Pb | 5.4 |
| $H_2SO_4$ | 54.8 | S/S | 24.0 |
| $NO_3^-$ | 0.66 | $S^O$ | 20.2 |
| | | $SO_4/S$ | 3.3 |

Overall metal extractions (%):  Zn  96.2

Fe  96.3

Recovery of S/S to $S^O$ (%):  87.0

Results of flotation tests on second stage leach residue:

| | Composition (%) | |
|---|---|---|
| | Pg/Ag Residue Tails | $S^O$ Product |
| Zn | 0.82 | 5.3 |
| Fe | 0.34 | 1.3 |
| Pb | 57.0 | 5.2 |
| $S^O$ | 6.4 | 82.5 |
| Ag | 89 g/tonne | 710 g/tonne |

Composition of melted sulphur (%):  $S^O$  99.9  Hg  12 ppm

Hg  12 ppm  Zn  37 ppm

Pb  28 ppm  Fe  19 ppm

As  < 0.0001  Ag  < 5 ppm

Representative product solution from the pilot plant was then blended in a ratio of 1:2 with impure Risdon plant solution and purified in a series of steps to remove iron, nitrate, copper, cadmium, cobalt and nickel before being subject to small scale electrolysis tests for recovery of zinc metal.

Ferrous and ferric ion were first removed from solution by addition of calcine at 75°C with aeration to give a $pH_{25}o$ of 5.5 and a total iron level in solution of 10 mg/L.

Removal of nitrate and other impurity metals was carried out in two stages using the E.Z. zinc dust purification process (Australian Patent No. 536,376), as a basis, but increasing the zinc dust level in the first stage to remove the majority of the nitrate as well as the copper. Additional sulphuric acid was also added to maintain the $pH_{25}o$ of the solution between 4 and 5 during the reaction. Over 98% of the copper was precipitated and 97.9% of the nitrate was destroyed. After filtration, cobalt and cadmium were precipitated by the standard second stage method to yield a final product solution containing Cu (0.09 mg/L), Cd (<.2 mg/L), Co (0.18 mg/L), Ni (0.3 mg/L) and $NO_3$ (< 2 mg/L).

Electrolysis of 100 L of this solution gave a satisfactory zinc deposit at a current efficiency of 91%.

## Claims

1. A direct leaching process for recovering valuable metals from metal sulphide containing ores or concentrates with the simultaneous production of high purity elemental sulphur and a residue containing enhanced levels of valuable metals such as lead, silver and gold, and a leach solution containing dissolved iron and valuable metals such as copper, cadmium and zinc, which, after treatment to precipitate dissolved iron and other impurities, is separated from the precipitated iron and treated by known procedures including electrolytic means to recover valuable dissolved metals characterized by:

(a) leaching the metal sulphide containing ore or concentrate in a dilute sulphuric acid solution in the presence of an oxidizing agent containing one or more oxides of nitrogen and an oxygen containing gas at a temperature not exceeding the boiling point at atmospheric pressure thereby producing a leach solution containing a low concentration of nitrate ions;

(b) separating undissolved residue and elemental sulphur from the leach solution, treating the leach solution to precipitate iron therefrom, and removing the precipitate;

(c) contacting the so-treated solution with a metallic reductant in the presence of added acid, thereby producing a substantially nitrate-free solution, and separating any cementates so formed;

(d) recovering dissolved metal values from the solution produced in step (c).

2. A process according to Claim 1 in which step (a) is carried out counter currently in at least two stages with recycle of partially leached solids from the second and any subsequent stages back to the first stage.

3. A process according to Claim 2 in which means are provided for collecting gas containing oxides of nitrogen evolved from the leaching stages and mixing them with an oxygen containing gas to assist in the formation of nitrogen dioxide.

4. A process according to Claim 2 or Claim 3 in which the first stage leach solution, containing a significant concentration of nitrate ions, is reacted in a second stage with an excess of fresh metal sulphide containing ore or concentrate, batchwise, or semibatchwise.

5. A process according to any one of Claims 1-4 in which the said oxidizing agent is one or a combination of the following: nitrogen dioxide gas; nitric acid; a salt of nitric acid; a mixture of nitric oxide gas and any oxygen containing gas.

6. A process according to any one of Claims 2-5 in which the concentration of sulphuric acid used in the first stage leach solution lies in the range 50-250 g $H_2SO_4$/L.

7. A process according to any one of Claims 2-6 in which the concentration of nitric acid in solution in the first stage leach lies in the range 10-120 g $HNO_3$/L.

8. A process according to any one of Claims 2-7 in which in the first stage leach partially leached solids recycled from the second and subsequent stages are leached in sulphuric acid solution and in the presence of the said oxidizing agents for a period of between 2 and 12 hours at a temperature in the range 80°C to the boiling point at atmospheric pressure.

9. A process according to any one of Claims 2-8 in which the solution leaving the first leaching stage contains 80-110 g $H_2SO_4$/L and 20-60 g $HNO_3$/L.

10. A process according to any one of Claims 2-9 in which oxygen or oxygen containing gas required to oxidize oxides of nitrogen generated in the first leaching stage is added via spargers beneath the impellers in the first stage leach reactors.

11. A process according to Claim 2 or Claim 4 in which the second stage leach is conducted batchwise or semibatchwise by adding an excess of said concentrates to the first stage leach solution preheated to a temperature greater than 85°C in a controlled but variable rate to maintain a rapid evolution of gases yet avoiding excessive froth formation, followed by maintenance of the slurry in suspension at above 85°C for a sufficient further period to ensure substantially complete removal of nitrate ions.

12. A process according to any one of claims 2-5 in which a means is provided for mixing the gas containing oxides of nitrogen evolved from the second stage leach with oxygen or an oxygen containing gas to assist in the formation of nitrogen dioxide gas.

13. A process according to any one of Claims 2-12 in which a means is provided for mixing the oxides of nitrogen/oxygen gas mixture derived from the second stage batch leach with the gas mixture evolved from the first stage leach and contacting said gas mixtures with a sulphuric acid solution, preferably in a series of spray towers operating counter currently so that the nitrogen dioxide formed in the gas mixture is absorbed in the said sulphuric acid thereby producing a dilute nitric/sulphuric acid containing solution which is used as the first stage leach solution.

14. A process according to any one of Claims 2-13 in which leach solution leaving the second or any subsequent stage is treated according to known procedures to precipitate dissolved iron and after separation from the precipitated iron is contacted in one or more stages with a metal reductant in the presence of added acid to reduce the nitrate ion concentration to a sufficiently low level that dissolved valuable metals may be recovered by known electrolytic means without adverse effects due to the presence of nitrate ions in solution.

15. A process according to any one of Claims 1-14 in which the metal reductant is one or a combination of reductants chosen from the group consising of: high purity zinc metal in the form of dust, powder, granules, prills, dross or coarse particles; an alloy of zinc with aluminium, lead, magnesium or cadmium in any of the aforementioned forms; a zinc dust cementate containing any or a combination of copper, nickel, cobalt and cadmium, cadmium metal in the presence of copper as an alloy or as a mixture.

16. A process according to any one of Claims 1-15 in which the reductant is contacted with said leach solution at a temperature in the range 20°C to the boiling point at atmospheric pressure and for a period not exceeding 2 hours.

17. A process according to any one of Claims 2-16 in which undissolved material mixed with elemental sulphur is separated from the first stage leach solution and subjected to selective separation procedures such as flotation and hydrocycloning to produce high purity elemental sulphur and a saleable grade of lead/silver rich residue.

18. A process according to any one of Claims 1-17 in which the said sulphuric acid solution is tank house spent electrolyte from an electrolytic zinc plant circuit.

19. A process for recovering zinc from zinc sulphide concentrates with the simultaneous production of high purity elemental sulphur and a saleable grade of lead/silver rich residue and a leach solution, which after treatment to remove dissolved iron and other impurities is treated electrolytically to recover dissolved zinc thereby producing a zinc plant spent electrolyte characterized by:

(a) leaching said concentrate countercurrently in at least two stages operating at a temperature between 80°C and the boiling point with recycle of partially leached solids from the second and any subsequent stages back to the first stage, in said spent electrolyte containing nitric acid; said nitric acid being formed by scrubbing a gas containing a mixture of oxides of nitrogen evolved from the leaching stages and oxygen or an oxygen-containing gas some of which is added by sparging into the first leach stage, and which is used as the leachant in the first stage leach;

(b) separating undissolved residue and elemental sulphur from the first stage leach solution and reacting said first stage solution containing a significant concentration of nitrate ions with an excess of zinc sulphide concentrate batchwise, at a temperature between 85°C and the boiling point thereby producing a leach solution containing a low concentration of nitrate ions;

(c) separating partially leached solids, precipitating dissolved iron, and separating the iron-containing precipitate;

(d) contacting said leach solution containing a nitrate ion concentration of less than 1 g/L, with a metal reductant preferably zinc dust in the presence of added acid in one or more stages, thereby producing a substantially nitrate-free solution, and recovering zinc electrolytically therefrom.

22

# FIGURE 1 — Simplified Flowsheet

0 272 060